# EUROPÄISCHE PATENTSCHRIFT

(11) **EP 2 499 728 B1**
(45) Veröffentlichungstag und Bekanntmachung des Hinweises auf die Patenterteilung: **28.08.2013**
(21) Anmeldenummer: 10801370.7
(22) Anmeldetag: 11.11.2010
(51) Int. Cl.: H02M 1/44

(54) **ANSTEUERSCHALTUNG FÜR EINE ELEKTRISCHE ANTRIEBSVORRICHTUNG SOWIE ELEKTRISCHE ANTRIEBSVORRICHTUNG MIT EINER DERARTIGEN ANSTEUERSCHALTUNG**
CONTROL CIRCUIT FOR AN ELECTRICAL DRIVE DEVICE AND ELECTRICAL DRIVE DEVICE HAVING SUCH A CONTROL CIRCUIT
CIRCUIT DE COMMANDE POUR UN DISPOSITIF D'ENTRAÎNEMENT ÉLECTRIQUE ET DISPOSITIF D'ENTRAÎNEMENT ÉLECTRIQUE MUNI D'UN TEL CIRCUIT DE COMMANDE

(30) Priorität: 12.11.2009 DE 102009052757
(43) Veröffentlichungstag der Anmeldung: 19.09.2012
(73) Patentinhaber: Conti Temic Microelectronic GmbH, 90411 Nürnberg (DE)
(72) Erfinder: SCHUBERT, Göran, 91126 Schwabach (DE); GRAF, Manuel, 90411 Nürnberg (DE)
(86) Internationale Anmeldenummer: PCT/DE2010/001307
(87) Internationale Veröffentlichungsnummer: WO 2011/057609

(56) Entgegenhaltungen:
- US-A1- 2005 052 804
- US-A1- 2007 103 951

## Beschreibung

Die Erfindung betrifft eine Ansteuerschaltung gemäß dem Oberbegriff des Anspruchs 1. Die Erfindung betrifft ferner eine elektrische Antriebsvorrichtung mit einer derartigen Ansteuerschaltung.

Elektrische Antriebsvorrichtungen werden beispielsweise in Form von elektrischen Hilfsantrieben sowohl in der Automatisierungs- sowie Haushaltsgeräteindustrie als auch in der Schienenverkehrstechnik, Kfz-Technik und der Aeronautik genutzt. Bei diesen Antriebsvorrichtungen ist der elektrische Antriebsmotor an einen Motorkonverter angeschlossen, der von einer Konverter-Ansteuerung gesteuert wird. Der Motorkonverter wird von einer Spannungsquelle und einem Stützkondensator gespeist. Nachteilig ist, dass derartige Antriebsvorrichtungen hohe Störemissionen aufweisen, die in vielen Anwendungsbereichen zunehmend zu Problemen führen.

US 2007/0103951 zeigt eine Antriebsvorrichtung mit einer Ansteuerschaltung gemäss dem Oberbegriff des Anspruchs 1.

Der Erfindung liegt die Aufgabe zugrunde, eine Ansteuerschaltung für eine elektrische Antriebsvorrichtung zu schaffen, die deren Störemissionen reduziert.

Diese Aufgabe wird durch eine Ansteuerschaltung mit den Merkmalen des Anspruchs 1 gelöst. Erfindungsgemäß wurde erkannt, dass die hohen Störemissionen durch die hohe zeitliche Änderung der Ansteuerkreisströme im Ansteuerkreis und der Stützkreisströme im Stützkreis verursacht werden, die zu Spannungsabfällen im Rückleiter zwischen Stützkondensator und Motorkonverter sowie zwischen der Konverter-Ansteuerung und dem Motorkonverter führen. Diese Spannungsabfälle treiben wiederum hochdynamische Ströme, die sich über ein Gehäuse, beispielsweise im Kfz über das Chassis und den Motorblock sowie über die als Masseklemme bezeichnete zweite Klemme der Ansteuerschaltung schließen. Die in diesem Gehäusekreis fließenden Ströme sind ungefiltert, woraus hohe Werte bei den Emissionsmessungen resultieren.

Die erfindungsgemäße Ansteuerschaltung basiert auf der Idee, die hochdynamischen Ströme des Motorkonverters vom Gehäuse, also dem Chassis oder dem Motorblock des Verbrennungsmotors zu separieren und diese in der Ansteuerschaltung einzuschließen. Dies wird dadurch erreicht, dass die Ansteuerschaltung zwei separate Rückleiter aufweist. Der erste Rückleiter verbindet den Stützkondensator und den Motorkonverter sowie den Motorkonverter und die Konverter-Ansteuerung und dient zur Ausbildung des Stützkreises sowie des Ansteuerkreises. Demgegenüber ist die zweite Klemme, also die Masseklemme, mit einem separaten zweiten Rückleiter verbunden. Damit die Rückleiter ein einheitliches Bezugspotential aufweisen, sind diese über genau eine Verbindungsstelle miteinander verbunden. Die Ansteuerkreisströme und die Stützkreisströme fließen über den ersten Rückleiter. Dadurch, dass der erste Rückleiter nur an einer Verbindungsstelle mit dem zweiten Rückleiter verbunden ist, resultieren aus den Ansteuerkreis- und Stützkreisströmen keine Ströme, die über den zweiten Rückleiter, die zweite Klemme und das Gehäuse fließen. Hierdurch werden die Ansteuerkreis- und Stützkreisströme räumlich eingeschlossen und vom Gehäuse separiert, wodurch sich die Emissionswerte des Motorkonverters bzw. einer mit der Ansteuerschaltung betriebenen Antriebsvorrichtung vom LW-Bereich bis hin zum UKW-Bereich erheblich reduzieren.

Eine Ansteuerschaltung nach Anspruch 2 verhindert wirkungsvoll, dass durch die Ansteuerkreis- und Stützkreisströme verursachte Ströme über die zweite Klemme und das Gehäuse fließen.

Eine Ansteuerschaltung nach Anspruch 3 ermöglicht, dass die Ansteuerkreis- und Stützkreisströme auf dem Bauteilträger und somit auf kleinem Raum eingeschlossen sind.

Eine Ansteuerschaltung nach Anspruch 4 oder 5 gewährleistet geringe Störemissionen.

Eine Ansteuerschaltung nach Anspruch 6 ist kostengünstig herstellbar, da das Einschließen der Ansteuerkreis- und Stützkreisströme auf dem Bauteilträger durch eine einfache Layoutänderung auf dem Bauteilträger, insbesondere der Leiterplatte, der LTCC (Low Temperature Cofired Ceramic) oder der Dickschichtkeramik möglich ist.

Der Erfindung liegt ferner die Aufgabe zugrunde, eine elektrische Antriebsvorrichtung zu schaffen, die geringe Störremissionen aufweist.

Diese Aufgabe wird durch eine elektrische Antriebsvorrichtung mit den Merkmalen des Anspruchs 7 gelöst. Die Vorteile der erfindungsgemäßen Antriebsvorrichtung entsprechen den bereits beschriebenen Vorteilen der erfindungsgemäßen Ansteuerschaltung.

Eine elektrische Antriebsvorrichtung nach Anspruch 8 oder 9 führt zu einer weiteren Reduzierung der Störemissionen, da auch die in dem Stromkreis fließenden Ströme, der durch den Antriebsmotor, das Antriebsmotorgehäuse und den Motorkonverter gebildet wird, nicht länger über die zweite Klemme und das Gehäuse fließen, sondern auf kleinem Raum eingeschlossen und von dem Gehäuse separiert sind.

Weitere Merkmale, Vorteile und Einzelheiten der Erfindung ergeben sich aus der nachfolgenden Beschreibung mehrerer Ausführungsbeispiele. Es zeigen:
- Fig. 1: ein Schaltungskonzept einer elektrischen Antriebsvorrichtung nach dem Stand der Technik,
- Fig. 2: das Schaltungskonzept in Fig. 1 mit den auftretenden Stromkreisen,
- Fig. 3: das Schaltungskonzept in Fig. 1 mit dem sich über das Gehäuse schließenden Stromkreis,
- Fig: 4: das Schaltungskonzept einer erfindungsgemäßen elektrischen Antriebsvorrichtung gemäß einem ersten Ausführungsbeispiel, und
- Fig. 5: das Schaltungskonzept einer erfindungsgemäßen elektrischen Antriebsvorrichtung gemäß einem zweiten Ausführungsbeispiel.

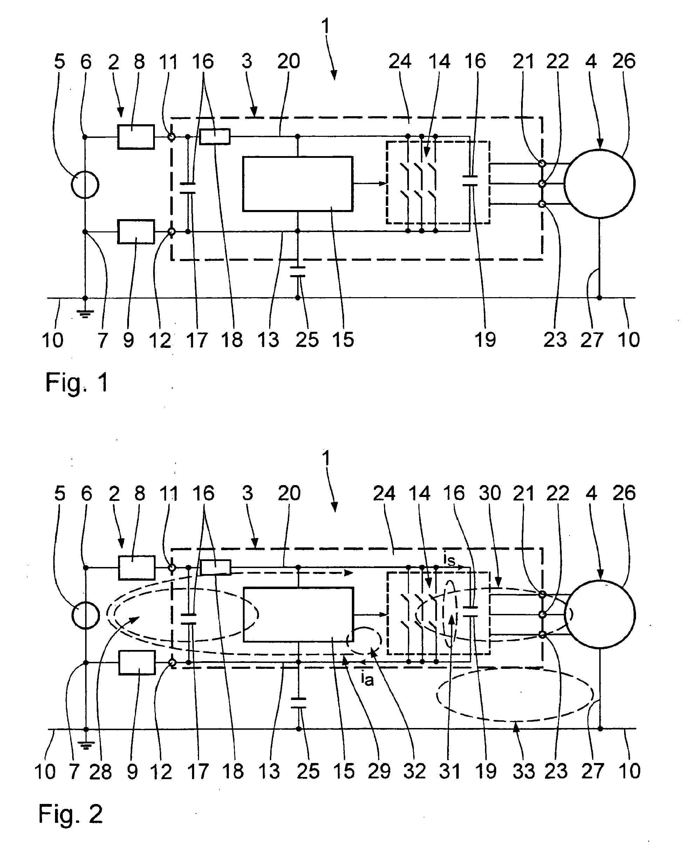

Nachfolgend wird anhand der Fig. 1 bis 3 zunächst das Schaltungskonzept einer elektrischen Antriebsvorrichtung 1 gemäß dem Stand der Technik beschrieben. Die Antriebsvorrichtung 1 weist eine Versorgungseinheit 2 auf, die über eine Ansteuerschaltung 3 einen elektrischen Antriebsmotor 4 ansteuert.

Die Versorgungseinheit 2 umfasst eine Spannungsquelle 5 bzw. eine Gleichspannungsquelle, an deren Polen 6, 7 sogenannte Netznachbildungen 8, 9 angeschlossen sind. Die Netznachbildungen 8, 9 bilden in dem dargestellten Messaufbau ein Bordnetz eines Kfz nach, das von der Spannungsquelle 5 in Form einer Batterie gespeist wird. Der Pol 7 der Spannungsquelle 5 ist mit einem Gehäuse 10 verbunden, das als Rückleiter bzw. Masseleiter dient. Das Gehäuse 10 ist beispielsweise das Chassis eines Kfz oder der Motorblock eines Verbrennungsmotors.

Die Ansteuerschaltung 3 weist zwei Klemmen 11, 12 auf, die mit der Versorgungseinheit 2 bzw. der Spannungsquelle 5 verbunden sind. Die erste Klemme 11 wird als K130-Klemme und die zweite Klemme 12 als K131-Klemme bezeichnet. Die Klemme 12 stellt die Masseklemme der Ansteuerschaltung 3 dar und ist mit dem internen Rückleiter 13 (interner GND) der Ansteuerschaltung 3 verbunden.

Zur Ansteuerung des Antriebsmotors 4 weist die Ansteuerschaltung 3 einen Motorkonverter 14 in Form einer B6-Brücke auf, der mittels einer Konverter-Ansteuerung 15 angesteuert wird. Zur Unterdrückung dynamischer Ströme ist in Richtung der Spannungsquelle 5 ein π-Filter 16 in die Ansteuerschaltung 3 eingefügt. Der π-Filter 16 weist eingansseitig einen Eingangskondensator 17 auf, der zwischen die Klemmen 11, 12 geschaltet ist. Parallel zu dem Eingangskondensator 17 ist eine Reihenschaltung aus einer Spule 18 und einem Stützkondensator 19 geschaltet. Die Konverter-Ansteuerung 15 und der Motorkonverter 14 sind zwischen die Verbindungsleitung 20, die sich von der Spule 18 zu dem Stützkondensator 19 erstreckt, und den Rückleiter 13 geschaltet. Ausgangsseitig weist die Ansteuerschaltung 3 drei Ausgangsklemmen 21, 22, 23 auf, an denen der Antriebsmotor 4 angeschlossen ist.

Die Ansteuerschaltung 3 ist auf einem Bauteilträger 24 ausgebildet, der üblicherweise als Rückleiter 13 bzw. interne Masse eine leitende Schicht aufweist. Zwischen dem Rückleiter 13 und dem Gehäuse 10 ist eine Gehäusekapazität 25 ausgebildet.

Der Antriebsmotor 4 ist als bürstenloser Gleichstrommotor (BLDC-Motor) ausgebildet und weist mehrere in einem Motorgehäuse 26 angeordnete und nicht näher dargestellte Motorwicklungen auf. Das Motorgehäuse 26 und das Gehäuse 10 sind über einen Verbindungsleiter 27 miteinander verbunden und haben somit ein einheitliches Bezugspotential.

Die sich in dieser Antriebsvorrichtung 1 ergebenden Stromkreise sind in Fig. 2 eingezeichnet. Energie geringer Dynamik wird direkt aus der Spannungsquelle 5 geliefert, sodass über einen Ansteuer-Nachladekreis 28 die Konverter-Ansteuerung 15 und über einen Stütz-Nachladekreis 29 der Stützkondensator 19 mit Energie versorgt werden. Der Motorkonverter 14 und der daran angeschlossene Antriebsmotor 4 bilden einen Lastkreis 30 aus. Die dynamischen Energieanteile des Lastkreises 30 werden vom Stützkondensator 19 geliefert, der insbesondere auch die im Motorkonverter 14 auftretenden Querströme treibt. Der Stützkondensator 19 bildet also mit dem Motorkonverter 14 einen Stützkreis 31 aus, in dem als Lade- und Entladeströme die Stützkreisströme iₛ fließen. Entsprechend bildet die Konverter-Ansteuerung 15 mit dem Motorkonverter 14 einen Ansteuerkreis 32 aus, in dem als Lade- und Entladeströme die Ansteuerkreisströme iₐ fließen. Der π-Filter 16 dient zur Unterdrückung der dynamischen Ströme in Richtung der Spannungsquelle 5. Über nicht eingezeichnete Kapazitäten der Motorwicklung zum Motorgehäuse 26 schließt sich ein Gehäusekreis 33, in dem dynamische Ströme fließen.

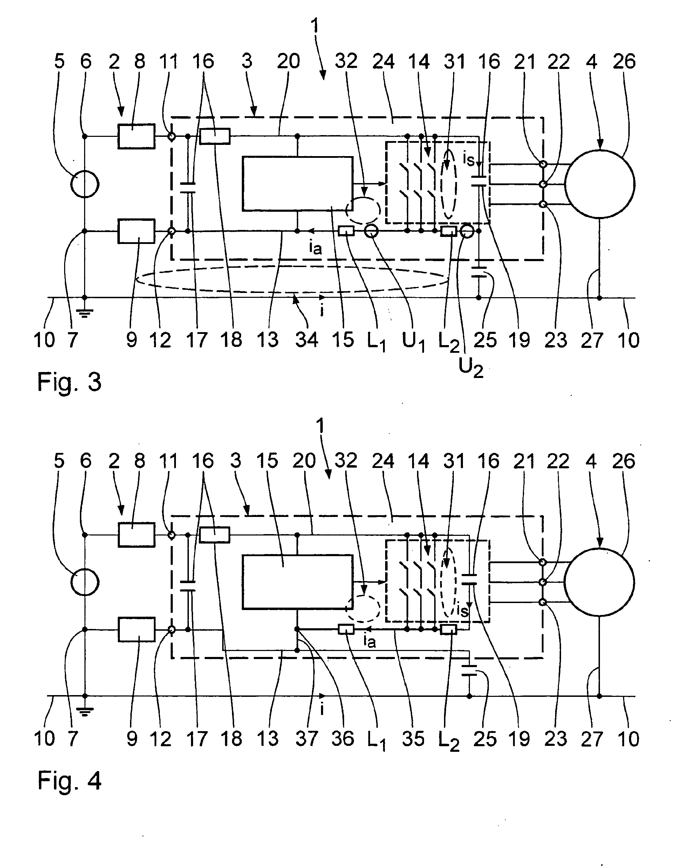

Erfindungsgemäß wurde erkannt, dass bei der Antriebsvorrichtung 1 gemäß dem Stand der Technik Spannungsabfälle in dem Rückleiter 13 zwischen dem Stützkondensator 19 und dem Motorkonverter 14 sowie zwischen der Konverter-Ansteuerung 15 und dem Motorkonverter 14 auftreten. Diese Spannungsabfälle treten an Induktivitäten L₁ und L₂ des Rückleiters 13 auf. In Fig. 3 sind für die Spannungsabfälle an den Induktivitäten L₁ und L₂ des Rückleiters 13 zwischen dem Stützkondensator 19 und dem Motorkonverter 14 bzw. zwischen der Konverter-Ansteuerung 15 und dem Motorkonverter 14 Ersatzspannungsquellen U₁ und U₂ eingeführt worden. Über die Gehäusekapazität 25 treiben diese Ersatzspannungsquellen U₁ und U₂ dynamische Ströme i in dem Rückleiter 13, die über die Klemme 12 und das Gehäuse 10 fließen. Der hieraus resultierende Stromkreis wird als i-Gehäusekreis 34 bezeichnet. Im Kfz treiben die Ersatzspannungsquellen U₁ und U₂ somit dynamische Ströme (i-Gehäuse) über die Gehäusekapazität 25, die sich über das Chassis oder den Motorblock des Verbrennungsmotors sowie die K131-Klemme bzw. das K131-Kabel schließen. Die hohe zeitliche Stromänderung di/dt der Ansteuerkreisströme iₐ und der Stützkreisströme iₛ sorgt für hochdynamische Spannungen der Ersatzspannungsquellen U₁ und U₂. Diese Spannungen treiben wiederum in dem filterlosen i-Gehäusekreis 34 den Strom i (GND-Gehäuse-Chassis-K131-Strom). Erfindungsgemäß wurde erkannt, dass hieraus hohe Werte bei den Emissionsmessungen resultieren.

Nachfolgend wird anhand von Fig. 4 eine erfindungsgemäße elektrische Antriebsvorrichtung 1 gemäß einem ersten Ausführungsbeispiel beschrieben, die eine erfindungsgemäße Ansteuerschaltung 3 aufweist. Soweit die erfindungsgemäße Antriebsvorrichtung 1 bzw. Ansteuerschaltung 3 der bereits beschriebenen Antriebsvorrichtung 1 bzw. Ansteuerschaltung 3 gemäß dem Stand der Technik entsprechen, ist dies nicht nochmals im Einzelnen beschrieben. Insofern wird auf die bereits beschriebene Antriebsvorrichtung 1 bzw. Ansteuerschaltung 3 gemäß dem Stand der Technik verwiesen.

Die Ansteuerschaltung 3 weist einen zusätzlichen Rückleiter 35 auf, der zur Ausbildung des Stützkreises 31 und des Ansteuerkreises 32 dient. Der separate Rückleiter 35 wird als Hochfrequenz-Masseleiter bezeichnet und bildet eine interne Hochfrequenz-Masse (HF-GND) der Ansteuerschaltung 3 aus. Die Induktivitäten L₁ und L₂ des Rückleiters 35 sind in Fig. 4 schematisch eingezeichnet. Der Rückleiter 35 ist über eine als Sternpunkt bezeichnete Verbindungsstelle 36 mittels einer Verbindungsleitung 37 mit dem Rückleiter 13 verbunden. Der Rückleiter 13 ist in üblicher Weise an die Klemme 12 angeschlossen. Der Stützkreis 31 wird somit durch den Motorkonverter 14, den Stützkondensator 19 und den separaten Rückleiter 35 gebildet. Entsprechend wird der Ansteuerkreis 32 durch den Motorkonverter 14, die Konverter-Ansteuerung 15 und den separaten Rückleiter 35 gebildet. Durch die genau eine Verbindungsstelle 36 sind die Rückleiter 13 und 35 zwar zur Herstellung eines einheitlichen Bezugspotentials miteinander verbunden, jedoch ist aufgrund der im Vergleich zu den Rückleitern 13 und 35 kleinen räumlichen Ausdehnung der Verbindungsstelle 36 und der Verbindungsleitung 37 kein Fluss hochdynamischer Ströme über die Verbindungsleitung 37 möglich. Hierdurch werden hochdynamische Ströme von dem Gehäuse 10 separiert. Die Lade- und Entladeströme, die zwischen dem Stützkondensator 19 und dem Motorkonverter 15 fließen, also die Stützkreisströme iₛ, sind in dem über den Rückleiter 35 geschlossenen Stützkreis 31 eingeschlossen. Entsprechend sind die Lade- und Entladeströme, die zwischen dem Motorkonverter 14 und der Konverter-Ansteuerung 15 fließen, also die Ansteuerkreisströme iₐ, in dem über den Rückleiter 35 geschlossenen Ansteuerkreis 32 eingeschlossen. Die hochdynamischen Stützkreisströme iₛ und Ansteuerkreisströme iₐ sind somit vom Gehäuse 10, also dem Chassis oder dem Motorblock, separiert. Damit fließen die hochdynamischen Ströme nicht mehr über die Klemme 12, die Netznachbildung 9 und das Gehäuse 10, was im Kfz dem Kabelbaum und dem Chassis bzw. dem Fahrzeugmotor entspricht. Die Emissionswerte des Motorkonverters 14 werden hierdurch vom LW-Bereich bis hin zum UKW-Bereich erheblich gesenkt (bis 30 dB).

Die hochdynamischen Ströme werden somit in der Ansteuerschaltung 3 und somit auf kleinem Raum eingeschlossen, wodurch die breitbandige Motorentstörung des Antriebsmotors 4 erzielt wird. Die Ansteuerschaltung 3 ist auf dem Bauteilträger 24 angeordnet, sodass der Stützkreis 31 und der Ansteuerkreis 32 auf dem Bauteilträger 24 ausgebildet sind. Die Rückleiter 13 und 35 stellen beispielsweise zwei unterschiedliche Leiterschichten auf dem Bauteilträger 24 dar, die an der Verbindungsstelle 36 mit einer kleinen räumlichen Ausdehnung miteinander verbunden sind. Das Einschließen der hochdynamischen Ströme kann somit durch ein geändertes Layout des Bauteilträgers 24 erzielt werden, wodurch keine zusätzlichen Kosten erzeugt werden. Der Bauteilträger 24 ist beispielsweise eine Leiterplatte, eine LTCC (Low Temperature Cofired Ceramic) oder eine Dickschichtkeramik.

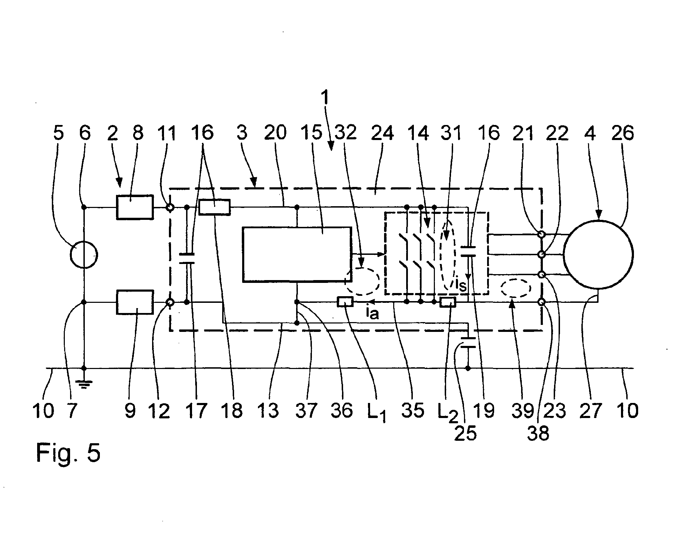

Nachfolgend wird anhand von Fig. 5 eine zweite erfindungsgemäße Antriebsvorrichtung 1 beschrieben, die eine erfindungsgemäße Ansteuerschaltung 3 aufweist. Im Unterschied zu der Antriebsvorrichtung gemäß Fig. 4 ist das Motorgehäuse 26 des Antriebsmotors 4 isoliert aufgehängt und nicht unmittelbar mit dem Gehäuse 10 verbunden. Das Motorgehäuse 26 ist über die Verbindungsleitung 27 mit einer Ausgangsklemme 38 der Ansteuerschaltung 3 verbunden, die wiederum mit dem separaten Rückleiter 35 verbunden ist. Der Antriebsmotor 4 bzw. die Kapazitäten der Motorwicklungen, das Motorgehäuse 26, die Verbindungsleitung 27, der Rückleiter 35 und der Motorkonverter 14 bilden einen Stromkreis 39 aus, der nicht das Gehäuse 10 beinhaltet. Dementsprechend fließen Ströme in diesem Stromkreis 39 nicht über das Gehäuse 10, wodurch die Emissionswerte der Antriebsvorrichtung 1 verbessert werden.

## Patentansprüche

1. Ansteuerschaltung für eine elektrische Antriebsvorrichtung, umfassend
- eine erste Klemme (11) und eine zweite Klemme (12) zum Anschluss an eine Spannungsquelle (5),
- einen Motorkonverter (14) zur Ansteuerung eines elektrischen Antriebsmotors (4),
- eine Konverter-Ansteuerung (15) zur Ansteuerung des Motorkonverters (14), und
- einen π-Filter (16) mit
-- einem mit den Klemmen (11, 12) verbundenen Eingangskondensator (17),
-- einem parallel zu dem Motorkonverter (14) geschalteten Stützkondensator (19), und
-- einer mit der ersten Klemme (11) verbundenen und in Reihe zu dem Stützkondensator (19) geschalteten Spule (18),
- der Stützkondensator (19) und der Motorkonverter (14) zur Ausbildung eines Stützkreises (31) sowie der Motorkonverter (14) und die Konverter-Ansteuerung (15) zur Ausbildung eines Ansteuerkreises (32) über einen ersten Rückleiter (35) miteinander verbunden sind,
**dadurch gekennzeichnet, dass**
- die zweite Klemme (12) mit einem zweiten Rückleiter (13) verbunden ist, und
- die Rückleiter (13, 35) über genau eine Verbindungsstelle (36) mittels einer Verbindungsleitung (37) miteinander verbunden sind, wobei die Verbindungsstelle (36) und die Verbindungsleitung (37) eine kleinere räumliche Ausdehnung als die Rückleiter (13, 35) selbst haben.

2. Ansteuerschaltung nach Anspruch 1, **dadurch gekennzeichnet, dass** diese auf einem Bauteilträger (24) angeordnet ist und der Ansteuerkreis (32) und der Stützkreis (31) auf dem Bauteilträger (24) ausgebildet sind.

3. Ansteuerschaltung nach einem der Ansprüche 1 oder 2, **dadurch gekennzeichnet, dass** diese derart ausgebildet ist, dass die zwischen der Konverter-Ansteuerung (15) und dem Motorkonverter (14) fließenden Lade- und Entladeströme (iₐ) in der Ansteuerschaltung (3) eingeschlossen sind.

4. Ansteuerschaltung nach einem der Ansprüche 1 bis 3, **dadurch gekennzeichnet, dass** diese derart ausgebildet ist, dass die zwischen dem Stützkondensator (19) und dem Motorkonverter (14) fließenden Ladeund Entladeströme (iₛ) in der Ansteuerschaltung (3) eingeschlossen sind.

5. Ansteuerschaltung nach einem der Ansprüche 2 bis 4 , **dadurch gekennzeichnet, dass** der Bauteilträger (24) aus der Gruppe Leiterplatte, LTCC und Dickschichtkeramik ausgewählt ist.

6. Elektrische Antriebsvorrichtung, umfassend
- eine Ansteuerschaltung (3) nach einem der Ansprüche 1 bis 5,
- eine Spannungsquelle (5), die
-- mit einem ersten Pol (6) mit der ersten Klemme (11) und mit einem zweiten Pol (7) mit der zweiten Klemme (12) verbunden ist, und
-- mit dem zweiten Pol (7) mit einem Gehäuse (10) als Masse verbunden ist,
- einen elektrischen Antriebsmotor (4), der mit dem Motorkonverter (14) verbunden ist, und
- eine Gehäusekapazität (25), die zwischen dem zweiten Rückleiter (13) und dem Gehäuse (10) ausgebildet ist.

7. Elektrische Antriebsvorrichtung nach Anspruch 5, **dadurch gekennzeichnet, dass** ein Motorgehäuse (26) des Antriebsmotors (4) isoliert aufgehängt ist.

8. Elektrische Antriebsvorrichtung nach Anspruch 6 oder 7 , **dadurch gekennzeichnet, dass** ein Motorgehäuse (26) des Antriebsmotors (4) mit dem ersten Rückleiter (35) verbunden ist.

## Claims

1. A drive circuitry for an electric drive device, comprising
- a first terminal (11) and a second terminal (12) for connection to a voltage source (5),
- a motor converter (14) for driving an electric drive motor (4),
- a converter drive (15) for driving the motor converter (14), and
- a π filter (16) having
-- an input capacitor (17) connected to the terminals (11, 12)
-- a support capacitor (19) connected in parallel to the motor converter (14),
and
-- a coil (18) connected to the first terminal (11) and connected in parallel to the support capacitor (19)
- the support capacitor (19) and the motor converter (14) being connected to one another via a first return wire (35) to form a support circuit (31) and the motor converter (14) and the converter drive (15) to form a drive circuit (32), **characterized in that**
- the second terminal (12) is connected to a second return wire (13), and
- the return wires (13, 35) are connected to one another by means of a connection line (37) via exactly one connection point (36), wherein the connection point (36) and the connection line (37) have a smaller spatial extent than the return wires (13, 35) themselves.

2. The drive circuitry according to claim 1, **characterized in that** said drive circuitry is arranged on a component carrier (24) and the drive circuit (32) and the support circuit (31) are formed on the component carrier (24).

3. The drive circuitry according to any one of claims 1 or 2, **characterized in that** said drive circuitry is formed such that the charge and discharge currents (iₐ) flowing between the converter drive (15) and the motor converter (14) are comprised in the drive circuitry (3).

4. The drive circuitry according to any one of claims 1 or 3, **characterized in that** said drive circuitry is formed such that the charge and discharge currents (iₛ) flowing between the support capacitor (19) and the motor converter (14) are comprised in the drive circuitry (3).

5. The drive circuitry according to any one of claims 2 to 4, **characterized in that** the component carrier (24) is selected from the group of PCB, LTCC and thick film ceramics.

6. An electric drive device comprising
- a drive circuitry (3) according to any one of claims 1 to 5,
- a voltage source (5) which is
-- connected with a first pole (6) to the first terminal (11) and with a second pole (7) to the second terminal (12), and
-- connected with the second pole (7) to a casing (10) as ground,
- an electric drive motor (4), which is connected to the motor converter (14), and
- a casing capacitance (25), which is formed between the second return wire (13) and the casing (10).

7. The electric drive device according to claim 5, **characterized in that** a motor casing (26) of the drive motor (4) is suspended in an isolated manner.

8. The electric drive device according to claim 6 or 7, **characterized in that** a motor casing (26) of the drive motor (4) is connected to the first return wire (35).

## Revendications

1. Montage d'excitation pour un dispositif d'entraînement électrique, comprenant
- une première borne (11) et une deuxième borne (12) pour la connexion à une source de tension (5),
- un motoconvertisseur (14) pour l'excitation d'un moteur d'entraînement (4) électrique,
- une excitation de convertisseur (15) pour l'excitation du motoconvertisseur (14), et
- un filtre type π (16), avec
-- un condensateur d'entrée (17) connecté aux bornes (11, 12),
-- un condensateur auxiliaire (19) monté en parallèle avec le motoconvertisseur (14), et
-- une bobine (18) connectée à la première borne (11) et montée en série avec le condensateur auxiliaire (19),
- le condensateur auxiliaire (19) et le motoconvertisseur (14) étant, pour la formation d'un circuit auxiliaire (31), connectés l'un à l'autre, et le motoconvertisseur (14) et l'excitation de convertisseur (15) étant raccordés l'un à l'autre pour la formation d'un circuit d'excitation (32) par le biais d'un premier conducteur de retour (35), **caractérisé en ce que**
- la deuxième borne (12) est connectée à un deuxième conducteur de retour (13), et
- les conducteurs de retour (13, 35) sont connectés l'un à l'autre par biais de précisément un point de connexion (36) au moyen d'une ligne de connexion (37), le point de connexion (36) et la ligne de connexion (37) ayant une dilatation dans l'espace plus faible que les conducteurs de retour (13, 35) eux-mêmes.

2. Montage d'excitation selon la revendication 1, **caractérisé en ce que** ce montage est disposé sur un support de composant (24), et **en ce que** le circuit d'excitation (32) et le circuit auxiliaire (31) sont constitués sur le support de composant (24).

3. Montage d'excitation selon une des revendications 1 ou 2, **caractérisé en ce que** ce montage est constitué de telle sorte que les courants de charge et de décharge (iₐ) s'écoulant entre l'excitation de convertisseur (15) et le motoconvertisseur (14) sont englobés dans le montage d'excitation (3).

4. Montage d'excitation selon une des revendications 1 à 3, **caractérisé en ce que** ce montage est constitué de telle sorte que les courants de charge et de décharge (iₛ) s'écoulant entre le condensateur auxiliaire (19) et le motoconvertisseur (14) sont englobés dans le montage d'excitation (3).

5. Montage d'excitation selon une des revendications 2 à 4, **caractérisé en ce que** le support de composant (24) est sélectionné dans le groupe carte de circuit imprimé, LTCC et céramique à couche épaisse.

6. Dispositif d'entraînement électrique, comprenant
- un montage d'excitation (3) selon une des revendications 1 à 5,
- une source de tension (5) qui
-- est connectée à un premier pôle (6) avec la première borne (11) et à un deuxième pôle (7) avec la deuxième borne (12), et
-- au deuxième pôle (7) avec un boîtier (10) en tant que masse,
- un moteur d'entraînement (4) électrique qui est connecté au motoconvertisseur (14), et
- une capacité de boîtier (25) qui est constituée entre le deuxième conducteur de retour (13) et le boîtier (10).

7. Dispositif d'entraînement électrique selon la revendication 5, **caractérisé en ce qu**'un boîtier de moteur (26) du moteur d'entraînement (4) est suspendu de façon isolée.

8. Dispositif d'entraînement électrique selon la revendication 6 ou 7, **caractérisé en ce qu**'un boîtier de moteur (26) du moteur d'entraînement (4) est connecté au premier conducteur de retour (35).
